Europäisches Patentamt

European Patent Office

Office européen des brevets

(19)

(11) EP 0 797 225 A2

(12) **EUROPEAN PATENT APPLICATION**

(43) Date of publication:
24.09.1997 Bulletin 1997/39

(51) Int Cl.$^6$: **H01G 4/30**

(21) Application number: 97301828.6

(22) Date of filing: 18.03.1997

(84) Designated Contracting States:
AT DE FR GB NL

(30) Priority: 19.03.1996 US 618839

(71) Applicant: TAM CERAMICS, INC.
Niagara Falls, NY 14305-0067 (US)

(72) Inventors:
• Chu, Mike Ssu-Hai
Lewiston, New York 140921 (US)
• Avniel, Yuval Charles
Wilson, New York 14172 (US)
• Bultitude, John
Youngstown, New York 14174 (US)
• Hood, Christopher
Reading, Berkshire, RG4 9UH (GB)
• Thompson, Ian
Buckingham, MK18 1JQ (GB)
• Rand, Michael
Bunny, Nottinghamshire, NG11 6QX (GB)

(74) Representative: Allard, Susan Joyce et al
BOULT WADE TENNANT,
27 Furnival Street
London EC4A 1PQ (GB)

(54) **Manufacturing process of multilayer capacitors**

(57)     A process for the preparation of a multilayer ceramic capacitor which process comprises:

i) forming a stack of a plurality of layers of a sinterable ceramic dielectric composition interleaved with inner electrodes of nickel oxide, or a mixture containing nickel oxide;

ii) co-firing the said multilayer stack in air or an oxygen-containing atmosphere in order to form a dense monolith;

iii) firing the monolith produced in step (ii) in a reducing atmosphere whilst maintaining an oxygen partial pressure in the range of from $10^{-5}$ to $10^{-15}$ in order to reduce the nickel oxide inner electrodes to nickel whilst avoiding reduction of the ceramic dielectric composition; and

iv) annealing the monolith produced in step (iii) in air, or an oxygen containing atmosphere.

EP 0 797 225 A2

## Description

The present invention relates to an improved process for the manufacture of multilayer capacitors and, in particular, to an improved process for the manufacture of multilayer capacitors containing nickel electrodes.

## BACKGROUND OF THE INVENTION

Multilayer ceramic capacitors are well known in the art and have been manufactured for many years by a variety of processes, all of which result in alternative layers of a ceramic dielectric composition and metal in the devices. The typical manufacturing processes require the co-sintering of the ceramic dielectric composition and metal to consolidate these materials into working devices. The co-sintering process is generally carried out in an air atmosphere and thus the inner electrodes of the devices generally comprise a precious metal such as platinum, gold, palladium, or alloys thereof, to avoid oxidation during the sintering process.

Inner electrodes made from precious metals are very expensive. Ceramic dielectric materials for the manufacture of multilayer ceramic capacitors with nickel inner electrodes have been reported in the patents described below. In all of these cases the processing must be carried out at elevated temperatures in non-oxidizing or reducing atmospheres for at least two processing stages.

The present invention relates to simplifying the processing for manufacture of multilayer ceramic capacitors containing nickel inner electrodes. The multilayer capacitors are manufactured using nickel oxide as the precursor to metallic nickel in the inner electrodes. The resulting capacitors are heated in air to remove binders and sintered into a dense monolith in a similar fashion to conventional multilayer ceramic capacitors with precious metal electrodes. The nickel oxide is then converted to metallic nickel in a single stage firing process. The resulting capacitors are annealed in air and have improved lifetimes as compared to MLCs prepared with metallic nickel electrodes using multi-stage processing in various atmospheres.

The processing of multilayer ceramic capacitors with inner electrodes of nickel or one of its alloys have been reported in the patents described below. The processing of these MLCs is described in detail in order to demonstrate the advantages of this invention.

## PRIOR ART

Three stages are generally used in the processing of multilayer ceramic capacitors with nickel inner electrodes; binder removal, sintering and annealing.

JP 5-21267 describes the preparation of multilayer ceramic capacitors using nickel or nickel alloy electrodes which consists of a binder removal treatment at 600° to 1200°C in wet nitrogen gas at an oxygen partial pressure of $10^{-4}$ to $10^{-8}$ atmospheres, followed by a firing process at 1200° to 1380°C at an oxygen partial pressure of $10^{-4}$ to $10^{-8}$ atmospheres achieved using a wet nitrogen/hydrogen gas mixture and annealing at <1100°C at an oxygen partial pressure of $10^{-4}$ to $10^{-6}$ atmospheres in wet nitrogen. This process therefore require a furnace or furnaces in which the gas atmospheres have to be closely controlled during each processing stage.

The use of a nickel oxide derived electrode is described in JP 3-112860. The process described in this case uses a binder burn out process in air at 700°C for 2 hours and it is claimed that carbon is more easily removed in this way compared to using non-oxidizing atmospheres. The resulting multilayer ceramic capacitors were treated at 250°C for 2 hours in a pure hydrogen atmosphere to reduce the nickel oxide in the electrodes to metallic nickel. The resulting multilayer capacitors were fired at 1250°C for 2 hours in a nitrogen gas atmosphere with a partial oxygen pressure of $10^{-9}$ atmospheres to form a ceramic monolith to which copper electrodes were applied after firing in a nitrogen atmosphere. In this case the binder removal is more easily carried out than in the JP 5-21267, but a furnace is required which can operate with two processing atmospheres, hydrogen and nitrogen (oxygen), or alternatively two furnaces are required to form a sintered monolith.

## SUMMARY OF THE INVENTION

Accordingly, the present invention provides a process for the preparation of a multilayer ceramic capacitor which process comprises:

i) forming a stack of a plurality of layers of a sinterable ceramic dielectric composition interleaved with inner electrodes of nickel oxide, or a mixture containing nickel oxide;
ii) co-firing the said multilayer stack in air or an oxygen-containing atmosphere in order to form a dense monolith;
iii) firing the monolith produced in step (ii) in a reducing atmosphere whilst maintaining an oxygen partial pressure in the range of from $10^{-5}$ to $10^{-15}$ in order to reduce the nickel oxide inner electrodes to nickel whilst avoiding reduction of the ceramic dielectric composition; and

iv) annealing the monolith produced in step (iii) in air, or an oxygen containing atmosphere.

## DETAILED DESCRIPTION OF THE INVENTION

In carrying out the process of the present invention, the co-firing in step (ii) is preferably carried out at a temperature in the range of from 900° to 1450°C, optionally with two firing stages at different temperatures. Furthermore, the multilayer stack may be subjected to a preliminary heating step in order to remove the major proportion of the binders from the nickel oxide ink and dielectric layers, prior to firing.

The sintered monolith may be tumbled to remove sharp edges prior to step (iii). Appropriate terminations for the nickel oxide electrode layers will generally be applied to the ends of the layers at this stage of the process, prior to firing in step (iii) of the method of the invention. Suitable nickel inks for this use are known in the art, for example RD166 (Cookson Matthey B.V.).

The co-firing of the multilayer stack in step (iii) of the method may be carried out in a reducing atmosphere comprising nitrogen, carbon monoxide and carbon dioxide, to give a low partial oxygen pressure so that nickel can form from nickel oxide. The partial oxygen pressure will be less than $10^{-5}$ atmospheres, preferably less than $10^{-7}$ atmospheres but more than $10^{-15}$ atmospheres. The oxygen partial pressure is controlled using the reducing atmosphere as determined by the $CO : CO_2$ ratio. Firing will generally be carried out at temperatures in the range of from 1000° to 1450°C, preferably below 1350°C, when using this reducing atmosphere.

An alternative reducing atmosphere in which the multilayer stack may be fired comprises nitrogen, hydrogen and water vapours to give a low partial oxygen pressure so that nickel can form from nickel oxide. The partial oxygen pressure will be less than $10^{-5}$ atmospheres, preferably less than $10^{-7}$ atmospheres but more than $10^{-15}$ atmospheres. The oxygen partial pressure is controlled using the reducing atmosphere as determined by the $H_2 : H_2O$ ratio. Using this reducing atmosphere, ferrous metals may be used in the construction of the furnace with firing generally being carried out at a atmosphere in the range of 1000° to 1300°C, preferably below 1250°C.

During the firing in step (iii) of the process of the invention the partial oxygen pressure is maintained within the ranges as specified in order to avoid the reduction of the ceramic material, whilst reducing nickel oxide to nickel.

The monolith produced in step (iii) of the method of the invention is then annealed by firing in air or an oxygen containing atmosphere. The oxygen-containing atmosphere may be produced during the annealing step, for example from a mixture of nitrogen and water vapour, the water decomposing on heating under these conditions to produce hydrogen and oxygen. Annealing will generally be carried out at a temperature in the range of from 400° to 1100°C, preferably at a temperature of about 700°C in the case of air.

The process of the present invention possesses the following advantages over the prior art processes:

i) a reduced tendency for the multilayer ceramic capacitors to have cracks as compared to processing with metallic nickel electrodes;

ii) sintering in air enables the dielectric composition to achieve a higher density;

iii) the sintered monolith can be tumbled to remove sharp edges prior to application of a co-fireable termination;

iv) the exposure to the reducing gas can be limited to the shortest possible time to form metallic nickel electrodes, thus limiting the number of oxygen vacancies; and

v) nickel oxide ink for the formation of the inner electrodes is cheaper than nickel ink.

In a more preferred embodiment of this invention the reduction of the nickel oxide to form nickel electrodes is carried out at a temperature of below 1250°C which simplifies the design of the furnace.

The present invention will be further described with reference to the following non-limiting examples.

## EXAMPLE 1 (Comparative)

To 612.31g of high purity barium titanate powder (HPB TAM Ceramics Inc.) was added 2.019g hydrated magnesium carbonate (equivalent to 0.0219 moles MgO), 0.236g cobalt oxide, 0.871g manganese dioxide, 8.84g barium carbonate, 2.691g silicon dioxide and 11.906g calcium titanate. This mixture was ball milled for 1 hour with 5000g of a yttria stabilized zirconia milling media with 800ml deionized water. The resulting slurry was dried and screened through a 40 mesh screen.

400g of the resulting powder was charged into a ball mill with 109.9g Binder No. 73210 and 96.0g Binder No. 73211 (both supplied by MSI Ltd; USA), together with 1920g of 0.5 inch diameter yttria stabilized zirconia media and milled for 16 hours to obtain a homogeneously dispersed slurry.

The slurry had a viscosity in the range of from 1500 to 3000 centipoise. The slurry was filtered and cast in accordance with standard techniques, into a tape having a thickness of 0.0040cm. The tape was then printed with a nickel ink, RD166 supplied by Cookson Matthey B.V; Maastricht, The Netherlands and laminated to give 10 active layers by procedures well known in the art.

Nickel ink was painted onto the capacitors to form electrical terminations during co-sintering using the following procedure. The binders were removed by heating the capacitors at 2°C per minute to 900°C in wet nitrogen and the capacitors were held in this atmosphere at this temperature for 11 hours. Dry nitrogen gas was then introduced into the furnace and the temperature increased to 1310°C at 4°C per minute. A mixture of carbon dioxide and carbon monoxide was then introduced into the furnace and heating continued at 4°C per minute to 1360°C, such that the partial oxygen pressure at this temperature was calculated to be $10^{-8}$ atmospheres according to the ratio of carbon dioxide to carbon monoxide. The capacitors remained at this temperature for 2 hours to co-sinter the dielectric and electrodes. The flow of carbon dioxide and carbon monoxide gas was stopped, then the furnace allowed to cool in nitrogen gas to room temperature at 4°C per minute.

Silver termination paste (DuPont No.4822) was baked onto the co-fired nickel terminations at 300°C and the resulting units annealed in air at 700°C for 4 hours. The capacitance (C), dissipation factor (DF) and capacitance change with temperature versus capacitance at 25°C (TC) were measured with a HP4274A capacitance bridge over the temperature range -55°C to +125°C. The dielectric constant (K) was calculated using the fundamental relationship

$$C = (KK_oAn)/t$$

where

$K_o =$ permittivity of free space
$A =$ area of electrode overlap
$n =$ number of active dielectric layers
$t =$ dielectric thickness

The lifetimes of these capacitors were estimated by measuring the time taken to degrade the insulation resistance to 100MΩ at 150°C with 100VDC applied. The properties of the multilayer capacitors are summarized in Table 1.

## EXAMPLE 2

The tape produced in Example 1 was printed with a nickel oxide ink, RD174 supplied by Cookson Matthey B.V; Maastricht, The Netherlands made using the same solvent and binder as the aforementioned nickel ink, RD166. The multilayer ceramic capacitors were slowly heated to 265°C over a period of 40 hours then retained at this temperature for 3 hours before cooling to remove a large portion of the binders present. These were then fired in air at by heating to 900°C over 9 hours with dwell at this temperature for 2 hours to remove any remnant binder residues. The temperature was then raised to 1320°C over 2 hours and the MLCs were held at this temperature for 2 hours before cooling to ambient. The resulting fired monoliths had nickel ink RD166 applied to the ends as terminations. These were fired at 4°C per minute to 1300°C in a mixture of nitrogen, carbon dioxide and carbon monoxide such that the partial oxygen pressure at this temperature was calculated to be $10^{-8}$ atmospheres according to the ratio of carbon dioxide to carbon monoxide. The capacitors remained at this temperature for 2 hours to reduce the nickel oxide to nickel electrodes and then the furnace was allowed to cool to room temperature at 4°C per minute. Silver termination paste (DuPont No. 4822) was baked onto the co-fired nickel terminations at 300°C and the resulting units annealed in air at 700°C for 4 hours.

The electrical properties were measured in the same manner as Example 1 and these results are summarized in Table 1.

## EXAMPLE 3

Example 2 was repeated for a new batch of the same powder formulation and the parts terminated with a nickel ink composition comprising nickel powder (34% by weight with a mean particle size of about 1 micrometre) in a low boiling point aromatic hydrocarbon containing a soluble acrylic binder, rather than the aforementioned RD166.

The electrical properties were measured in the same manner as Example 1 and these results are summarized in Table 1.

## EXAMPLE 4

MLCs made according to Example 3 were prefired in air at 1320°C as previously described. These were fired at 4°C per minute to 1300°C in a mixture of nitrogen, carbon monoxide and carbon dioxide such that the partial oxygen pressure at this temperature was calculated to be $10^{-9}$ atmospheres according to the ratio of carbon monoxide to carbon dioxide. The capacitors remained at this temperature for 2 hours to reduce the nickel oxide to nickel electrodes and then the furnace was allowed to cool to room temperature at 4°C per minute. Silver termination paste (DuPont No.4822) was baked onto the co-fired nickel terminations at 300°C and the resulting units annealed in air at 700°C for 4 hours.

The electrical properties were measured in the same manner as Example 1 and these results are summarized in Table 1.

## EXAMPLE 5

MLCs with nickel oxide inner electrodes were manufactured by the method described in Example 3, using a new batch of the same powder formulation, and prefired in air at 1320°C as previously described. These were fired at 4°C per minute to 1200°C in a mixture of nitrogen, hydrogen and water such that the partial oxygen pressure at this temperature was calculated to be $10^{-13}$ atmospheres according to the ratio of water to hydrogen. The capacitors remained at this temperature for 2 hours to reduce the nickel oxide to nickel electrodes and then the furnace was allowed to cool to room temperature at 4°C per minute. Silver termination paste (DuPont No.4822) was baked onto the co-fired nickel terminations at 300°C and the resulting units annealed in air at 700°C for 4 hours.

The electrical properties were measured in the same manner as Example 1 and these results are summarized in Table 1.

## EXAMPLES 6 and 7

MLCs with nickel oxide inner electrodes fired in air at 1320°C according to Examples 3 and 5 previously described were processed as described below to give Examples 6 and 7, respectively. These air fired MLCs were fired at 4°C per minute to 1200°C in a mixture of nitrogen, hydrogen and water such that the partial oxygen pressure at this temperature was calculated to be $5 \times 10^{-15}$ atmospheres according to the ratio of water to hydrogen. The capacitors remained at this temperature for 2 hours to reduce the nickel oxide to nickel electrodes and then the furnace was allowed to cool to room temperature at 4°C per minute. Silver termination paste (DuPont No.4822) was baked onto the co-fired nickel terminations at 300 °C and the resulting units annealed in air at 700°C for 4 hours.

The electrical properties were measured in the same manner as Example 1 and these results are summarized in Table 1.

**TABLE 1**

| Example Number | K | DF (%) | TC (%) at Temperature (°C) | | | | IR Time (hours) |
| --- | --- | --- | --- | --- | --- | --- | --- |
| | | | -55 | -35 | 85 | 125 | |
| 1* | 2512 | 1.46 | -13.6 | -11.3 | 2.2 | 0.1 | 65 |
| 2 | 2230 | 1.63 | -13.7 | -12.2 | 3.8 | 2.9 | 104 |
| 3 | 2658 | 1.41 | -14.5 | -12.5 | 6.8 | 1.9 | 243 |
| 4 | 2750 | 1.60 | -14.7 | -13.1 | 11.0 | 5.7 | 223 |
| 5 | 1750 | 2.50 | -8.4 | -4.7 | 2.9 | 8.3 | 215# |
| 6 | 2458 | 1.67 | -11.6 | -9.6 | 5.8 | 14.9 | 227# |
| 7 | 1988 | 1.49 | -12.2 | -10.5 | 4.7 | 13.7 | 173 |

* This Example is outside the range of the claims of this patent

# The test was stopped at this time with IR > 100MΩ

### EXAMPLES 8 and 9

To explore the processing conditions required MLCs were made according Example 3 but prefired in air at 1320°C for 2 hours (Example 8) and 1400°C for 2 hours (Example 9), respectively, using the ramp rates as described in Example 2. These MLCs were fired at 4°C per minute to 1100°C in a mixture of nitrogen, hydrogen and water such that the partial oxygen pressure at this temperature was calculated to be $5 \times 10^{-15}$ atmospheres according to the ratio of water to hydrogen. The capacitors remained at this temperature for 4 hours to reduce the nickel oxide to nickel electrodes and then the furnace was allowed to cool to room temperature at 4°C per minute. The resulting units were annealed in air at 700°C for 4 hours. Silver termination paste (DuPont No.4822) was baked onto the co-fired nickel terminations at 300°C. The dielectric constant (K) was calculated, and the dissipation factor (DF) and change of capacitance with temperature (TC) determined as described in Example 1. In addition IR at 50VDC was measured at 25°C and 125°C and these values were multiplied by the value of the capacitance at these temperatures to give resistance x capacitance (RC) values as an indication of MLC properties. These results are given in Table 2.

**TABLE 2**

| Example Number | K | DF (%) | TC (%) at Temperature (°C) | | | | IR (GΩ) @ T | | RC (ΩF) @ T | |
|---|---|---|---|---|---|---|---|---|---|---|
| | | | -55 | -35 | 85 | 125 | 25 | 125 | 25 | 125 |
| 8 | 1967 | 2.3 | -11.6 | -10.6 | 9.0 | 16.8 | 4.0 | 5.4 | 311 | 495 |
| 9 | 1922 | 2.6 | -12.9 | -12.4 | 10.8 | 14.9 | 16.4 | 10.9 | 1100 | 841 |

## EXAMPLES 10 to 15

MLCs were prepared in the same manner as Example 2 except that in this case parts with 15 active layers were manufactured by raising the temperature to 1360°C for 2 hours during the air prefiring rather than 1320°C and the annealing stage was carried out in wet nitrogen gas as described below. These annealing conditions in wet nitrogen gas were as follows: Example 10, 700°C for 6 hours; Example 11, 700°C for 1 hour; Example 12, 800°C for 1 hour; Example 13, 900°C for 1 hour; Example 14, 800°C for 6 hours and Example 15, 800°C for 11 hours. The electrical properties of these MLCs were measured in a similar manner to Examples 8 and 9 and are given in Table 3.

**TABLE 3**

| Example Number | K | DF (%) | TC (%) at Temperature (°C) | | | | IR (GΩ) | @ T | RC (ΩF) | @ T |
| | | | -55 | -35 | 85 | 125 | 25 | 125 | 25 | 125 |
|---|---|---|---|---|---|---|---|---|---|---|
| 10 | 2525 | 2.0 | -14.6 | -11.5 | 9.6 | 7.2 | 18.2 | 32.0 | 545 | 1030 |
| 11 | 2537 | 1.8 | -9.7 | -9.6 | 6.5 | -3.8 | 23.7 | 19.8 | 714 | 573 |
| 12 | 2552 | 2.0 | -10.4 | -9.4 | 7.0 | 3.2 | 17.2 | 20.4 | 520 | 593 |
| 13 | 2622 | 2.6 | -9.7 | -9.1 | 1.1 | -11.8 | 25.2 | 25.2 | 783 | 691 |
| 14 | 2173 | 2.7 | -10.5 | -9.3 | 6.7 | -3.3 | 35.0 | 20.5 | 901 | 511 |
| 15 | 2207 | 2.2 | -10.3 | -8.8 | 6.0 | -5.1 | 26.5 | 693 | 16.9 | 419 |

**Claims**

1.  A process for the preparation of a multilayer ceramic capacitor which process comprises:

    i) forming a stack of a plurality of layers of a sinterable ceramic dielectric composition interleaved with inner electrodes of nickel oxide, or a mixture containing nickel oxide;
    ii) co-firing the said multilayer stack in air or an oxygen-containing atmosphere in order to form a dense monolith;
    iii) firing the monolith produced in step (ii) in a reducing atmosphere whilst maintaining an oxygen partial pressure in the range of from $10^{-5}$ to $10^{-15}$ in order to reduce the nickel oxide inner electrodes to nickel whilst avoiding reduction of the ceramic dielectric composition; and
    iv) annealing the monolith produced in step (iii) in air, or an oxygen containing atmosphere.

2.  A process as claimed in claim 1 wherein the co-firing in step (ii) is carried out at a temperature in the range of from 900° to 1450°C.

3.  A process as claimed in claim 1 or claim 2 wherein the firing in step (iii) is carried out in a reducing atmosphere comprising nitrogen, carbon monoxide and carbon dioxide.

4.  A process as claimed in claim 3 wherein the firing is carried out at a temperature in the range of from 1000° to 1450°C.

5.  A process as claimed in claim 4 wherein the firing is carried out at a temperature of below 1300°C.

6.  A process as claimed in claim 1 or claim 2 wherein the firing in step (iii) is carried out in a reducing atmosphere comprising nitrogen, hydrogen and water vapour.

7.  A process as claimed in claim 6 wherein the firing is carried out at a temperature in the range of from 1000° to 1300°C.

8.  A process as claimed in claim 7 wherein the firing is carried out at a temperature of below 1250°C.

9.  A process as claimed in any one of the preceding claims wherein the annealing in step (iv) is carried out at a temperature in the range of from 400° to 1100°C.

10. A process as claimed in claim 1 wherein the firing in step (iii) uses a combination of the gases as defined in claim 3 and claim 6.